# EUROPÄISCHE PATENTANMELDUNG

(11) **EP 4 603 995 A1**
(43) Veröffentlichungstag der Anmeldung: **20.08.2025**
(21) Anmeldenummer: 24157871.5
(22) Anmeldetag: 15.02.2024
(51) Int. Cl.: G06F 21/53, G06F 21/57, G06F 21/55, G06F 21/51

(54) **VERFAHREN UND SYSTEM ZUM SICHEREN BETRIEB EINER CONTAINER-IMPLEMENTIERTEN SOFTWAREKOMPONENTE**

(71) Anmelder: Siemens Aktiengesellschaft, 80333 München (DE)
(72) Erfinder: KNIERIM, Christian, 81373 München (DE); RAUTÄSCHLEIN, Jonathan, 81549 München (DE)
(74) Vertreter: Siemens Patent Attorneys

(57) **Zusammenfassung**

Die Erfindung betrifft ein System und Verfahren zum sicheren Betrieb einer containerimplementierten Softwarekomponente umfassend die Schritte:
- Empfangen (M1) einer Bereitstellungsinformation in einer zentralen Verwaltungsvorrichtung (11), wobei die Bereitstellungsinformation Informationen zur Softwarekomponente und deren Laufzeitkonfiguration umfasst,
- Konfigurieren (M2) einer Test-Laufzeitumgebung und einer Test-Softwarekomponente entsprechend der Bereitstellungsinformation auf einem von der Verwaltungsvorrichtung (11) verwalteten Gastrechner (12),
- Prüfen (M3), ob eine Sicherheitslücke für die auf der konfigurierten Test-Laufzeitumgebung ausgeführte Test-Softwarekomponente vorliegt, und
- abhängig von der ermittelten Sicherheitslücke,
Anpassen (M4) der Bereitstellungsinformation durch die Verwaltungsvorrichtung und Freigeben (M5) der Softwarekomponente zum Starten auf einer Laufzeitumgebung, die entsprechend der angepassten Bereitstellungsinformation konfiguriert sind, oder
Zurückweisen (M6) der Bereitstellungsinformation.

## Beschreibung

### Technisches Gebiet

Die Erfindung betrifft ein Verfahren, ein System und ein Computer-Programmprodukt zum sicheren Betrieb einer Container-implementierten Softwarekomponente.

### Technischer Hintergrund

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft. Software-Container, im Weiteren kurz Container genannt, stellen somit gegenüber virtuellen Maschinen, die über ein eigenes Betriebssystem verfügen und mit Hilfe eines Hypervisors Hardwareressourcen des darunterliegenden Systems zugewiesen bekommen und über einen eigenen Betriebssystemkern verfügen, eine ressourcenschonende Art der Virtualisierung dar und kapseln eine in einem Container betriebene Softwarekomponente vom darunterliegenden Gastrechner ab.

Um einen Container auf dem Gastrechner starten zu können, wird ein Containerimage benötigt, welches neben der Softwarekomponente auch die für die Softwarekomponente erforderlichen Binärprogramme und Bibliotheken enthält. Aus dem Containerimage wird mit Hilfe einer Deployment-Konfiguration, im Weiteren auch als Bereitstellungsinformation bezeichnet, auf dem Gastrechner eine Containerinstanz erstellt und auf der Laufzeitumgebung des Gastrechners ausgeführt.

Eine orchestrierte Laufzeitumgebung umfasst einen Orchestrierer, bevorzugt ausgebildet durch eine Orchestrierungssoftware, ausgeführt auf einem vom Gastrechner unterschiedlichen Computer, und mindestens einen Gastrechner, häufig aber eine Vielzahl von Gastrechnern, die dem Orchestrierer zugeordnet sind. Der Orchestrierer startet, verwaltet und beendet Containerinstanzen auf den zugeordneten Gastrechnern. Typische orchestrierte Laufzeitumgebungen sind hierbei Kubernetes-basierte Containerumgebungen, die beispielsweise Cloud-basierte Container-as-a-Services-Umgebungen oder in einer Cloud betriebene virtuelle Instanzen als Knoten einer orchestrierten Laufzeitumgebung verwalten.

In der Deployment-Konfiguration werden mindestens ein Containerimage referenziert, Prozess-Privilegien der Containerinstanz zugeordnet und optional Anwendungsspezifische Konfigurationseinstellungen zugewiesen. Hierdurch wird die eigentliche Anwendung konfiguriert.

Es ist bekannt Containerimages mit Hilfe von Schwachstellenscannern nach bekannten Schwachstellen zu durchsuchen, wie beispielsweise in WO 2023/061733 A1 beschrieben. Somit kann sichergestellt werden, dass das eigentliche Containerimage keine bekannten Schwachstellen enthält. Zum Betrieb der Anwendung wird das Containerimage entsprechend der Deployment-Konfiguration auf einer Laufzeitumgebung instanziiert. Durch diese Konfigurationseinstellungen kann die resultierende Containerinstanz Informationen von sich oder aus zugewiesenen Laufwerken Preis geben, die nicht Bestandteil des Containerimages sind und ebenfalls Schwachstellen enthalten.

### Zusammenfassung der Erfindung

Es ist somit eine Aufgabe der vorliegenden Erfindung, ein Verfahren zu schaffen, mit dem der Betrieb von Container-implementierte Softwarekomponenten besser gegen die Ausnutzung von Schwachstellen und somit Angreifer von außen abgesichert werden kann.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum sicheren Betrieb einer Container-implementierten Softwarekomponente umfassend die Schritte:
- Empfangen einer Bereitstellungsinformation in einer zentralen Verwaltungsvorrichtung, wobei die Bereitstellungsinformation Informationen zur Softwarekomponente und deren Laufzeitkonfiguration umfasst,
- Konfigurieren einer Test-Laufzeitumgebung und einer Test-Softwarekomponente entsprechend der Bereitstellungsinformation auf einem von der Verwaltungsvorrichtung verwalteten Gastrechner,
- Prüfen, ob eine Sicherheitslücke für die auf der konfigurierten Test-Laufzeitumgebung ausgeführte Test-Softwarekomponente vorliegt, und
- abhängig von der ermittelten Sicherheitslücke,

Anpassen der Bereitstellungsinformation durch die Verwaltungsvorrichtung und Freigeben der Softwarekomponente zum Starten auf der Laufzeitumgebung, die entsprechend der angepassten Bereitstellungsinformation konfiguriert sind, oder
Zurückweisen der Bereitstellungsinformation.

In vorteilhafter Weise wird die Softwarekomponente unter "Betriebsbedingungen" geprüft und somit die tatsächliche Laufzeitkonfiguration, auf der die Softwarekomponente ausgeführt wird, bei der Prüfung auf Schwachstellen berücksichtigt. Wurde bei einer Prüfung eines Containerimages der Softwarekomponente keine Schwachstellen gefunden, so ist es dennoch möglich, dass sich durch die tatsächliche finale Konfiguration der Softwarekomponente als Containerinstanz auf der Laufzeitumgebung Änderungen ergeben, die eine Auswirkung auf die Sicherheit im Betrieb, also bei Ausführung der Containerinstanz haben. Durch das Prüfen der auf der konfigurierten Laufzeitumgebung ausgeführte Softwarekomponente können somit Sicherheitslücken aufgedeckt werden, die vorher nicht erkannt wurden. Andererseits ist es durch das vorgeschlagene Verfahren möglich festzustellen, ob eine bekannte Schwachstelle im Containerimage mit der gewählten Konfiguration, d.h. mit der Bereitstellungsinformation tatsächlich ausnutzbar ist. In der Beschreibung werden die Begriffe "Sicherheitslücke" und "Schwachstelle" synonym verwendet.

In einer vorteilhaften Ausführungsform wird die angepasste Bereitstellungsinformation in einer Ergebnisdatenbank gespeichert, und beim erneuten Empfangen der Bereitstellungsinformation wird die angepasste Bereitstellungsinformation bei der Ergebnisdatenbank abgefragt und gestartet.

Somit wird ein mehrfaches Prüfen der Bereitstellungsinformation vermieden und der Bearbeitungsaufwand der Bereitstellungsinformation reduziert.

In einer vorteilhaften Ausführungsform wird die Test-Laufzeitumgebung und die Test-Softwarekomponente entsprechend einer zusätzlichen Isolationsrichtlinie durchgeführt. Die Isolationsrichtlinie umfasst mindestens eine Beschränkung in Bezug auf Netzwerkverbindungen der Softwarekomponente und/oder mindestens eine Beschränkung in Bezug auf den Gastrechner, auf dem die Softwarekomponente konfiguriert und ausgeführt wird, wobei die Isolationsrichtlinie die Konfiguration der Laufzeitumgebung und der Softwarekomponente entsprechend der Bereitstellungsinformation nicht verändert.

Die Isolationsrichtlinie ermöglicht eine flexible Gestaltung der Ausführungsumgebung. Insbesondere kann die Isolationsrichtlinie die Ausführungsumgebung als Sandbox vorgeben, auf der die Kommunikation der Softwarekomponente nach außen beschränkt und/oder auf einem speziellen Gastrechner ausgebildet wird. Die Konfiguration der Softwarekomponente und der Laufzeitumgebung entsprechend der Bereitstellungsinformation bleibt durch die Isolationsrichtlinie unverändert.

In einer vorteilhaften Ausführungsform wird die Isolationsrichtlinie abhängig von der Bereitstellungsinformation ausgewählt und von der Verwaltungsvorrichtung, bevorzugt von einer Zugangskontrolleinheit, auch als Admission Controller bezeichnet, zugeordnet.

Somit werden behält die Verwaltungsvorrichtung Information über die Konfiguration und Ausführung der Prüfung. Besonders günstig wird die Isolationsrichtlinie in der Zugangskontrolleinheit der Verwaltungsvorrichtung ausgeführt, die üblicherweise die Durchführung Ausführung einer Containerinstanz steuert.

In einer vorteilhaften Ausführungsform wird das Prüfen mittels mindestens einem Penetrationstest angewandt auf die Test-Softwarekomponente in der Test- Laufzeitumgebung, durchgeführt.

Somit wird auch die individuell über die Bereitstellungsinformation vorgegebene Konfiguration der Laufzeitumgebung bei den Penetrationstests der Softwarekomponente berücksichtigt.

In einer vorteilhaften Ausführungsform ermittelt ein Komponentenerkennungsmodul einzelne Softwaremodule der Test-Softwarekomponente und konfiguriert abhängig von den ermittelten Softwaremodulen ein Scanprofil aus verschiedenen Penetrationstests.

Somit kann ein für die Zusammensetzung der jeweilige Softwarekomponente optimiertes Scanprofil zusammengestellt werden.

In einer vorteilhaften Ausführungsform wird nach dem Konfigurieren eines neuen Scanprofils die Bereitstellungsinformation einer bereits ausgeführten Softwarekomponente erneut auf Schwachstellen geprüft.

Somit können neue Schwachstellen in der Softwarekomponente, die durch aktualisierte Penetrationstests identifiziert werden können, zeitoptimiert erkannt werden.

In einer vorteilhaften Ausführungsform wird eine Gesamt-Risikostufe für die Softwarekomponente in der Verwaltungsvorrichtung aus einem Set von Einzel-Risikostufen ermittelt, wobei jede der Einzel-Risikostufen für eine unterschiedliche detektierte Schwachstelle ermittelt wird, und die Bereitstellungsinformation wird abhängig von der Gesamt-Risikostufe angepasst.

Somit kann die Anzahl der Anpassungen der Bereitstellungsinformation auf die Anzahl der Gesamt-Risikostufen reduziert werden.

In einer vorteilhaften Ausführungsform wird die Gesamt-Risikostufe, die für die Bereitstellungsinformation ermittelt wird, in einer Risikodatenbank abspeichert.

In einer vorteilhaften Ausführungsform wird das Prüfen auf Sicherheitslücken durchgeführt, indem die Risikodatenbank nach einer vorhandenen Gesamt-Risikostufe für die Bereitstellungsinformation überprüft wird, und die Bereitstellungsinformation anhand der ermittelten Gesamt-Risikostufe angepasst wird.

Somit kann für eine bereits geprüfte Bereitstellungsinformation die ermittelte Gesamt-Risikostufe aus der Risikodatenbank ermittelt und die Bereitstellungsinformation ohne erneute Prüfung angepasst werden. Dies erspart Verarbeitungskapazität.

In einer vorteilhaften Ausführungsform wird der für die Bereitstellungsinformation abgespeicherten Gesamt-Risikostufe ein Erstellungszeitstempel zugeordnet.

Somit kann einfach die Gültigkeit der Risikostufe geprüft werden.

Gemäß einem zweiten Aspekt betrifft die Erfindung ein System umfassend eine Verwaltungsvorrichtung und mindestens einen von der Verwaltungsvorrichtung verwalteten Gastrechner, die derart ausgebildet sind, folgende Schritte durchzuführen:
- Empfangen einer Bereitstellungsinformation in der zentralen Verwaltungsvorrichtung, wobei die Bereitstellungsinformation Informationen zur Softwarekomponente und deren Laufzeitkonfiguration umfasst,
- Konfigurieren einer Test-Laufzeitumgebung und einer Test-Softwarekomponente entsprechend der Bereitstellungsinformation auf einem der Gastrechner,
- Prüfen, ob eine Sicherheitslücke für die auf der konfigurierten Test-Laufzeitumgebung ausgeführte Test-Softwarekomponente vorliegt, und
- abhängig von der ermittelten Sicherheitslücke, Anpassen der Bereitstellungsinformation durch die Verwaltungsvorrichtung und Freigeben der Softwarekomponente zum Starten auf der Laufzeitumgebung, die entsprechend der angepassten Bereitstellungsinformation konfiguriert sind, oder Zurückweisen der Bereitstellungsinformation.

Das System ermöglicht einen sicheren Betrieb der Softwarekomponente, indem die zentrale Verwaltungsvorrichtung die Softwarekomponente zunächst innerhalb einer "Sandbox", die mit Hilfe von beispielsweise Netzwerkbeschränkungen abgeschirmt ist, ausführt, diese dort mit Hilfe eines Penetration-Testing-Tools analysiert und anschießend erst komplett freigibt.

Gemäß einem dritten Aspekt betrifft die Erfindung ein Computerprogrammprodukt, umfassend ein nicht flüchtiges computer-lesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens durchzuführen.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk bereitgestellt oder geliefert werden.

### Exemplarische Ausführungsbeispiele der Zeichnung

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
Fig. 1 eine erstes Ausführungsbeispiel des erfindungsgemäßen Verfahrens als Ablaufdiagramm;
Fig. 2 eine Ausführungsbeispiel des erfindungsgemäßen Systems einschließlich der am Verfahren beteiligten Komponenten in schematischer Darstellung;
Fig. 3 ein zweites Ausführungsbeispiel des erfindungsgemäßen Verfahrens als Nachrichtenablaufdiagramm; und
Fig. 4 ein Zustandsdiagramm einer Zugangskontrolleinheit, die in einer Verwaltungsvorrichtung des erfindungsgemäßen Systems angeordnet ist, als Flussdiagramm.

Einander entsprechende Teile sind in allen Figuren mit den gleichen Bezugszeichen versehen.

Sofern es in der nachfolgenden Beschreibung nicht anders angegeben ist, beziehen sich die Begriffe "empfangen", "konfigurieren", "prüfen", "anpassen" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vor-liegen können, beispielsweise als elektrische Impulse.

Das System und darin optional enthaltene Komponenten, wie beispielsweise ein Gastrechner bzw. die auf dem Gastrechner implementierte Container-Laufzeitumgebung, die Verwaltungsvorrichtung, und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

### Detaillierte Beschreibung der Ausführungsbeispiele

Unabhängig vom grammatikalischen Geschlecht eines bestimmten Begriffes sind Personen mit männlicher, weiblicher oder anderer Geschlechteridentität mit umfasst.

### Hintergrund

Containerinstanzen werden mit Hilfe von einer Bereitstellungsinformation, z.B. dem Docker-Compose Yaml oder der Kubernetes Deployment-Konfiguration oder einem Helm-Chart beschrieben. Hierin werden mindestens ein Containerimage referenziert, Prozess-Privilegien der Instanz zugeordnet und im Falle einer Orchestrierungslösung Kubernetes auch applikationsspezifische Konfigurationseinstellungen mit Hilfe sogenannter ConfigMaps zugewiesen.

Containerimages können zwar mit Hilfe von Schwachstellenscannern nach bekannten Programmierfehler in Bibliotheken gescannt werden. Jedoch werden dadurch nicht die auf einer Laufzeitumgebung betriebenen Konfigurationseinstellungen getestet. So ist es möglich, dass das eigentliche Containerimage keine bekannten Schwachstellen enthält, jedoch aufgrund entsprechender Konfigurationseinstellungen, die bei der Instanziierung auf der Laufzeitumgebung vorgenommen werden, eine Instanz Informationen von sich Preis gibt, die für Denial Of Service Attacken verwendet werden könnten. Andererseits können Sicherheitslücken im Containerimage bekannt sein, die jedoch nur in bestimmten Deployment-Konfigurationen ausnutzbar sind. Durch die Zuweisung von persistenten Laufwerken können Inhalte zugänglich werden, die nicht Bestandteil des Images sind und ebenfalls Schwachstellen enthalten.

Hierdurch entsteht die Situation, dass das gescannte Image zwar keine Schwachstellen aufweist, sich aber die tatsächliche finale Konfiguration auf einer Laufzeitumgebung von der vorher gescannten Konfiguration unterscheidet und wiederum Schwachstellen aufweisen kann.

### Beschreibung der Erfindung

Um einen sicheren Betrieb einer Softwarekomponente zu ermöglichen, die mittels Containervirtualisierung auf einem Gastrechner ausgeführt und durch eine zentrale Verwaltungsvorrichtung, wie beispielsweise eine Kubernetes Control Plane gesteuert und verwaltet wird, wird folgendes Verfahren vorgeschlagen. Im Weiteren wird der Begriff Bereitstellungsinformation verwendet und umfasst Informationen zur Softwarekomponente, insbesondere Information zum Containerimage und der Laufzeitkonfiguration zum Betreiben der Softwarekomponente.

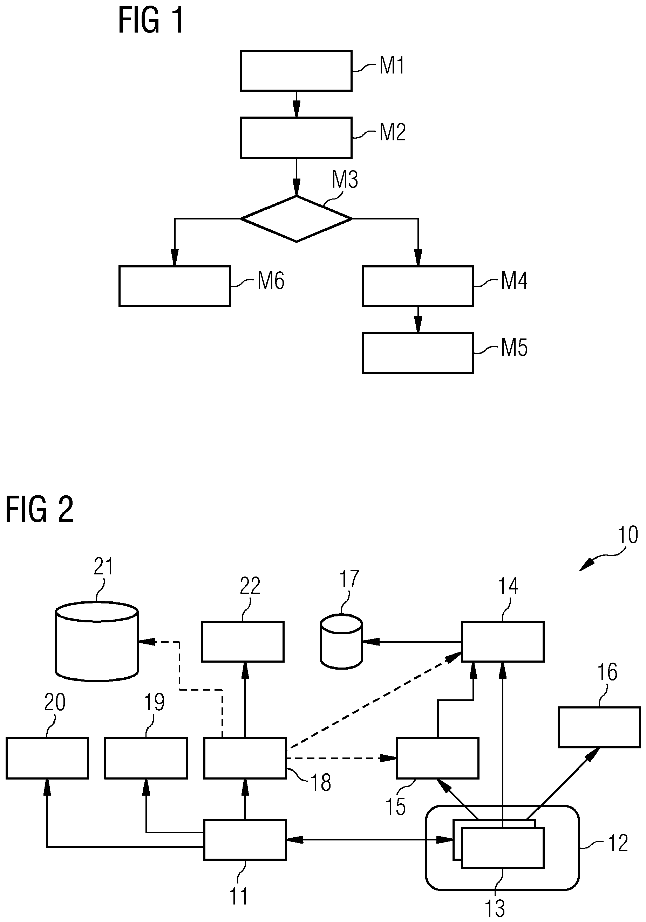

Wird eine Bereitstellungsinformation in der zentralen Verwaltungsvorrichtung empfangen, siehe Schritt M1 in Fig.1, wird in Schritt M2 eine Test-Laufzeitumgebung und eine Test-Softwarekomponente entsprechend der Bereitstellungsinformation auf einem von der Verwaltungsvorrichtung verwalteten Gastrechner konfiguriert, siehe Schritt S2. Diese auf der der Test-Laufzeitumgebung ausgeführte Test-Softwarekomponente wird nun auf Sicherheitslücken überprüft, siehe Schritt M3. Die Test-Laufzeitumgebung und die darauf ausgeführte Test-Softwarekomponente entsprechen der Bereitstellungsinformation und somit der tatsächlich in Betrieb ausgeführten Softwarekomponente. Somit kann die Softwarekomponente unter Betriebsbedingungen auf Schwachstellen getestet werden.

Abhängig von der ermittelten Sicherheitslücke, wird entweder die Bereitstellungsinformation durch die Verwaltungsvorrichtung angepasst, siehe M4 und zum Starten der Softwarekomponente auf der Laufzeitumgebung freigegeben, siehe M5, die entsprechend der angepassten Bereitstellungsinformation konfiguriert sind. Alternativ wird die Bereitstellungsinformation zurückgewiesen, siehe M6.

In einer bevorzugten Variante wird die angepasste Bereitstellungsinformation in einer Ergebnisdatenbank gespeichert. Beim erneuten Empfangen der Bereitstellungsinformation wird bei der Ergebnisdatenbank abgefragt und wenn vorhanden, die angepasste Bereitstellungsinformation an die Verwaltungsvorrichtung übermittelt und von dort aus auf einem Gastrechner gestartet.

Die Softwarekomponente wird bevorzugt mittels mindestens einem Penetrationstest, der auf die Test-Softwarekomponente in der Test-Laufzeitumgebung, angewandt wird, durchgeführt.

So wird beispielsweise eine die Softwarekomponente umfassende Containerinstanz auf einer gemanagten bzw. orchestrierten Laufzeitumgebung, wie beispielsweise Kubernetes, erst ausgeführt, nachdem die Containerinstanz auf einem von der Verwaltungsvorrichtung gesteuerten Gastrechner mittels Penetrationstests von außen gescannt wurde. Der mindestens eine Penetrationstest ist beispielsweise mittels einer auf der Laufzeitumgebung befindlichen Penetrationstesting-Instanz implementiert.

Um sicherzustellen, dass die Test-Softwarekomponente bzw. deren Containerinstanz nicht von außen erreichbar ist, wird diese entsprechend einer zusätzlichen Isolationsrichtlinie ausgeführt.

Die Isolationsrichtlinie umfasst mindestens eine Beschränkung in Bezug auf Netzwerkverbindungen der Softwarekomponente und/oder mindestens eine Beschränkung in Bezug auf den Gastrechner, auf dem die Softwarekomponente konfiguriert und ausgeführt wird. Die Isolationsrichtlinie verändert dabei nicht die Konfiguration der Laufzeitumgebung und der Softwarekomponente. Diese bleibt entsprechend der Bereitstellungsinformation konfiguriert. Die Isolationsrichtlinie wird abhängig von der Bereitstellungsinformation ausgewählt und von der Verwaltungsvorrichtung, bevorzugt von einer darin angeordneten Zugangskontrolleinheit, zugeordnet.

Die Zugangskontrolleinheit, auch Admission Controller genannt, erlaubt die zunächst Ausführung der Softwarekomponente entsprechend der Bereitstellungsinformation, stellt jedoch Sandboxing-Anforderungen gemäß der Isolationsrichtlinie an die Containerinstanz. Sandboxing-Anforderungen sind hierbei in erster Linie Beschränkungen der ein- und ausgehenden Netzwerkverbindungen.

Für Softwarekomponenten, die eine Applikation in einem mikrosegmentierten Applikationsverbund ausführt, schreibt die Isolationsrichtlinie beispielsweise vor, dass einzelne Containerinstanzen auf einem Test-Gastrechner ausgeführt werde müssen, bevor diese in den mikrosegmentierten Applikationsverbund eingebracht werden. Für welche Containerinstanzen die Isolationsrichtlinie gelten soll und was die Isolationsrichtlinie im Einzelnen enthält, wird beispielsweise innerhalb einer Konfigurationsdatei (Admission Controller Config) in der Zugangskontrolleinheit definiert.

Um die Softwarekomponente möglichst ressourcenschonend und treffend auf Sicherheitslücken prüfen zu können, ermittelt ein Komponentenerkennungsmodul einzelne Softwaremodule, die in der Test-Softwarekomponente enthalten sind. Abhängig von den ermittelten Softwaremodulen wird ein Scanprofil aus verschiedenen Penetrationstests konfiguriert. Das Komponentenerkennungsmodul wird in einer Ausführungsform container-implementiert als Komponenten-Erkennungs-Instanz ausgeführt. Um verschiedene Komponenten-Erkennungs-Instanzen und Penetrationstests, wie beispielsweise Schwachstellenscanner, auf der von der Verwaltungsvorrichtung gesteuerten Plattform aus Gastrechnern zu betreiben, wird diese ebenfalls innerhalb dieser Konfigurationsdatei konfiguriert sind.

Nach dem Konfigurieren eines neuen Scanprofils wird die Bereitstellungsinformation einer bereits ausgeführten Softwarekomponente erneut auf Schwachstellen geprüft und abhängig von den ermittelten Sicherheitslücken die Bereitstellungsinformation entsprechend den Verfahrensschritten M4, M5 entweder angepasst und die Softwarekomponente und die Laufzeitkonfiguration entsprechend der angepassten Bereitstellungsinformation abgeändert.

Aus den Penetrationstests wird eine Risikostufe für die Softwarekomponente aus einem Set von Einzel-Risikostufen ermittelt, wobei jede der Einzel-Risikostufen für eine unterschiedliche detektierte Sicherheitslücke ermittelt wird. Die Bereitstellungsinformation wird abhängig von der Risikostufe angepasst. Für den Penetrationstest, bspw. einen Schwachstellenscanner, wird angenommen, dass dieser eine Risikostufe der detektierten Schwachstelle bzw. Sicherheitslücke unterschiedlich klassifiziert und einen Maximalwert oder eine Summe der detektierten Sicherheitslücken ermittelt.

Die für die Bereitstellungsinformation ermittelte Risikostufe wird in einer Risikodatenbank, bevorzugt mit einem Zeitstempel der Prüfung, abspeichert. Diese Risikostufe wird von der Zugangskontrolleinheit bewertet und die Ausführung der Softwarekomponente wie empfangen oder komplett oder abgestuft mit einer angepassten Bereitstellungsinformation zulassen oder die Ausführung nach der durchgeführten Analyse komplett zurückgewiesen.

Fig.2 zeigt eine Ausführungsform eines Systems 10, das derart konfiguriert ist das beschriebene Verfahren auszuführen. Das System 10 umfasst eine Verwaltungsvorrichtung 11 sowie mindestens einen Gastrechner 12 auf dem mindestens eine, häufig jedoch eine Vielzahl von Laufzeitumgebungen 13 zur Ausführung von unterschiedlichen Containerinstanzen 14, 15, 16 konfigurierbar sind. Die Laufzeitumgebungen und die Containerinstanzen werden abhängig von einer Bereitstellungsinformation 20 konfiguriert.

Die Containerinstanz 16 ist beispielsweise eine Test-Softwarekomponente auf einer Test-Laufzeitumgebung, die gemäß der empfangenen Bereitstellungsinformation konfiguriert sind. Die Containerinstanz 15 ist beispielsweise als Komponentenerkennungsmodul /-instanz konfiguriert, die Einzel-Komponenten der Containerinstanz 16 ermittelt. Die Containerinstanz 16 umfasst die Test-Softwarekomponente und deren Test-Laufzeitumgebung, die entsprechend der Bereitstellungsinformation konfiguriert sind.

Die entsprechende Bereitstellungskonfiguration wird durch die jeweils für den Container spezifische Konfigurationseinstellung 19, beispielsweise eine Kubernetes ConfigMap, von der Verwaltungsvorrichtung an einen der Gastrechner zur Ausführung übermittelt und somit instanziiert. Die Zugangskontrolleinheit 18 greift auf Konfigurationsdateien 22 zu. Die Zugangskontrolleinheit 18 steuert beispielsweise das Zusammenwirken der Containerinstanz 14, 16 mit der Risikodatenbank 21. Die Containerinstanz 14, die die Penetrationstests ausführt greift auf die Scanprofil-Datenbank 17 zu.

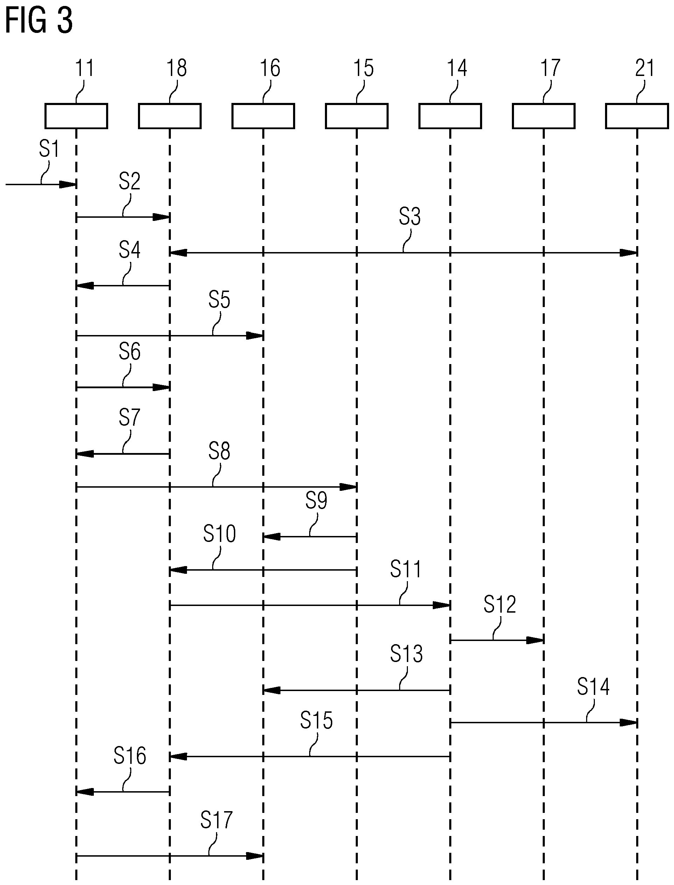

Anhand von Fig.3 wird der Ablauf des Verfahrens beim Einspielen einer neuen Bereitstellungsinformation in das System 10 beschrieben. Die involvierten Komponenten sind mit Referenzen entsprechend dem in Fig.2 dargestellten System 10 bezeichnet.

Soll eine Softwarekomponente in einer neue Containerinstanz gestartet werden, wird eine Bereitstellungsinformation an die Verwaltungsvorrichtung 11 übergeben, siehe S1, welche dieser wie üblich an die Zugangskontrolleinheit 18 weiterleitet, S2. Die Zugangskontrolleinheit 18 überprüft anschließend durch Abfrage S3 der Risikodatenbank 21, ob die Bereitstellungsinformation, bzw. die Containerinstanz in Kombination mit den hinterlegten Konfigurationsdateien bereits geprüft wurde und anhand des Erstellungszeitstempels, ob eine ermittelte Risikostufe gültig ist. Wird eine gültige Risikostufe ermittelt, wird die Bereitstellungsinformation anhand der ermittelten Risikostufe angepasst und zum Starten freigegeben oder abgewiesen.

Wird keine Risikostufe ermittelt, wird das Starten einer Test-Softwarekomponente bei der Verwaltungsvorrichtung 11 angefordert, siehe S4, und von diese gemäß der Isolationsrichtlinie in einem Sandboxing-Modus gestartet, siehe S5. Nach einer Bestätigung, dass die Test-Softwarekomponente gestartet ist, siehe S6, wird die Verwaltungsvorrichtung 11 informiert, siehe S7, dass eine Komponenten-Erkennungsinstanz 15 zu starten ist, siehe S8, welche mit Hilfe entsprechender Privilegien in der Lage ist, auf die ausgeführte Containerinstanz der Test-Softwarekomponente16 zuzugreifen, und die einzelnen Softwaremodule der Test-Softwarekomponente 16 des Containerimages zu ermitteln und, dessen Konfiguration und/oder die in einem persistenten Speicherbereich abgelegten Dateien zu analysieren, siehe S9.

Angenommen wird hierbei, dass die Komponentenerkennungsinstanz 15 für jedes erkannte Softwaremodul ein Regelwerk besitzt, mit dem sie von dem Softwaremodul abhängige Einstellungen ermittelt. Beispielsweise wäre eine solche abhängige Einstellung die Ermittlung einer Schreibberechtigungen für ein Verzeichnis, welches von einem Webserver verwendet wird, um PHP-Skripte auszuliefern oder eine aktivierte cgi-Schnittstelle und die damit verbundenen Verzeichnisse.

Die Ergebnisse der Komponenten-Erkennungsinstanz 15 werden über die Zugangskontrolleinheit 18, siehe S10 an die Penetrationstest-Instanz 14 übermittelt, siehe S11. Der Penetrationstest wird in diesem Ausführungsbeispiel als Containerinstanz auf einem Gastrechner des von der Verwaltungsvorrichtung 11 verwalteten Clusters an Gastrechnern ausgeführt. In einer Variante wird der Penetrationstest auf einem von dem Cluster unabhängigen Computerplattform ausgeführt, die dann mit der container-implementierten Test-Softwarekomponente 16 kommuniziert.

Die Scanergebnisse der Komponenten-Erkennungsinstanz 15 sowie die Test-Laufzeitkonfiguration, beispielsweise bzgl. Prozessprivilegien, werden von der Penetrationstest-Instanz 14 verwendet, um ein auf den Scan-Ergebnissen basierendes Scanprofil zu ermitteln, siehe S11. Das Scanprofil wird hierbei ermittelt, indem für die verschiedenen Softwaremodule, die zugewiesenen Bereitstellungsinformationen einschließlich die zugewiesenen Prozessprivilegien verwendet werden und hierdurch dann verschiedene angepasste Penetrationstests ermittelt und ausgeführt werden.

Die Berücksichtigung der Laufzeitkonfiguration mitsamt den verwendeten Softwaremodule hat den Vorteil, dass ein Penetrationstest deutlich schneller erfolgen kann als z.B. ein allgemeiner Scan mit bekannten Scannern, da die im Einsatz befindlichen Softwaremodule bereits erkannt wurden. Alternativ bzw. zusätzlich kann ein Anwender auch einzelnen Container-Instanzen auf Basis deren Labels eigenständige Scan-Profile zuweisen. Ist ein solches Scanprofil bereits verfügbar, wird es bei der Scanprofildatenbank 17 abgefragt, siehe S12.

Abhängig von den ermittelten durchzuführenden Tests werden im nächsten Schritt S13 durch die Penetrationstest-Instanz 14 die Sicherheitslücken auf der zu analysierenden Containerinstanz des Test-Softwaremoduls ermittelt. Eine Einzel-Risikostufe für jede erkannte Sicherheitslücke, werden gemäß einer in der Risikodatenbank 21 beschriebenen Bewertung definiert und für die Test-Containerinstanz 16 eine Gesamt-Risikostufe ermittelt. Die ScanErgebnisse umfassend die Gesamt-Risikostufe und/oder die Einzel-Risikostufen für die Containerinstanz bzw. die Bereitstellungsinformation werden unter Berücksichtigung der applikationsspezifische Konfigurationseinstellung in der Risikodatenbank 21 gespeichert, siehe S14, und ein entsprechendes Gültigkeitsdatum hinterlegt. Hierbei können entsprechende Referenzen in Form von Checksummen für die jeweilige Bereitstellungsinformation und applikationsspezifische Konfigurationseinstellung definiert werden.

Angenommen wird zusätzlich, dass die in der Bereitstellungsinformation definierten Containerimages eindeutig sind und unterschiedliche Containerimages nicht auf gleiche Art und Weise referenziert werden. Somit ist sichergestellt, dass immer eine eineindeutige Referenz verwendet wird. Ist dies nicht der Fall, so müssen innerhalb der Risikodatenbank 21 zusätzlich zur Bereitstellungsinformation die verwendeten Containerimages, beispielsweise mit Hilfe von entsprechender Checksummen, hinterlegt werden. Beim Start einer neuen Containerinstanz werden diese entsprechend überprüft.

Das Ergebnis der Penetrationstests, d.h. die ermittelten Sicherheitslücken, wird im nächsten Schritt S15 an die Zugangskontrolleinheit 14 zurückgemeldet. In der Konfiguration der Zugangskontrolleinheit 14 ist hinterlegt, welche Gesamt-Risikostufe für welche Containerinstanz-Typen, zu welchen durch den Zugangskontrolleinheit 14 vorgeschriebenen Einschränkungen führen. Da diese Einschränkungen enger als die vom Anwender für die Containerinstanz definierten Netzwerk-Richtlinien sein können, kann die Containerinstanz vor einem Einbringen beispielsweise in eine mikrosegmentierte Applikation, stärker eingeschränkt werden als vom Anwender ursprünglich spezifiziert wurde. Hierzu kann beispielsweise eine bestehende Kubernetes Netzwerk-Policy für die Instanz durch den Netzwerk-Policy-Treiber deaktiviert werden oder aber teilweise durch die ermittelte Einschränkung überschrieben werden.

Ist dies der Fall, kann der Verwender der Verwaltungsvorrichtung 11 informiert werden, siehe S16, dass die Containerinstanz aufgrund der detektierten Ergebnisse nicht wie gewünscht gemäß der ursprünglich übergebenen Bereitstellungsinformation exponiert wird, sondern lediglich eingeschränkt gemäß der angepassten Bereitstellungsinformation verfügbar ist. Der Verwender kann dann abhängig von der Konfiguration der Zugangskontrolleinheit 18 entscheiden, ob der Vorgang abgebrochen werden soll oder die Softwarekomponente mit den Einschränkungen gestartet werden soll. Alternativ kann die Beschränkung auch automatisch umgesetzt werden und der Verwender wird lediglich informiert oder nach dem erfolgten Scan wird verzögert der Start der Containerinstanz verweigert. In Schritt S17 wird die Test-Softwarekomponente bzw. deren Containerinstanz gemäß der angepassten Bereitstellungsinformation angepasst und gestartet.

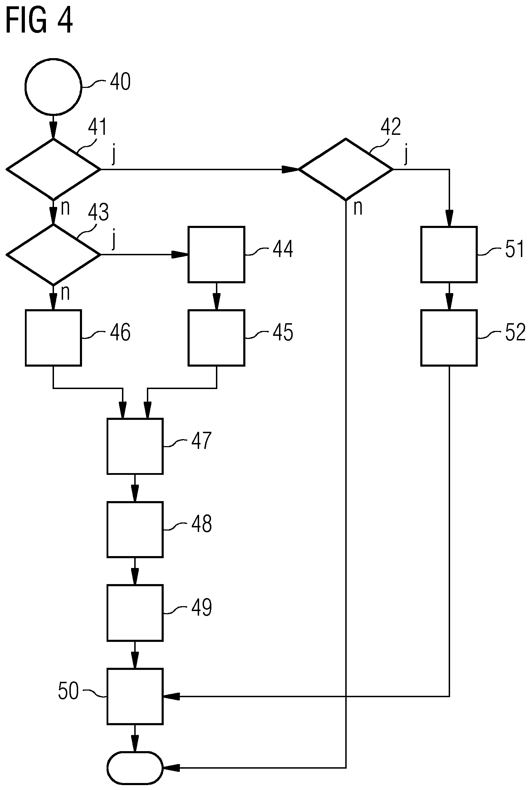

Fig.4 zeigt die Zustände innerhalb der Zugangskontrolleinheit 18, wenn eine neue Konfigurationsdatei oder neue Bereitstellungsinformation an die Zugangskontrolleinheit 18 übergeben wird, siehe Zustand 40.

Nachfolgend wird jeweils eine Kombination aus neuer Konfigurationsdatei und vorhandener Bereitstellungsinformation oder eine Kombination aus vorhandener Konfigurationsdatei und neuer Bereitstellungsinformation auf Sicherheitslücken überprüft. Es wird nicht zwischen Konfigurationsdatei (ConfigMap) und Bereitstellungsinformation (Deployment-Config) unterschieden, sondern beides gemeinsam als Änderungsoperation auf dem Orchestrator betrachtet. Die in Fig.4 dargestellten Zustände beziehen sich auf Zustände innerhalb der Zugangskontrolleinheit 18 aus Fig. 2 bzw. Fig.3. Ein Zustand kann dabei interne Aktion auslösen oder eine Aktion bei der Verwaltungsvorrichtung 11 auslösen.

In Zustand 41 wird ermittelt, ob bereits ein Scan-Ergebnis, d.h. eine Gesamt-Risikostufe für die Kombination verfügbar und gültig ist. Ist ein Scan-Ergebnis vorhanden, wird im Zustand 42 geprüft, ob neue Instanzen zu starten sind. Ist dies der Fall werden in Zustand 51 Instanz-Kennungen der neuen Instanzen ermittelt. Anschließend wird hinterlegt, welches Gesamt-Risiko aus der Risikodatenband für die Instanz-Kennungen gültig ist. Anschließend wird das Gesamt-Risiko der Kombination und die durchzuführende Aktion an die entsprechende Funktionalität der Verwaltungsvorrichtung 11 übergeben, siehe Zustand 50. Die Überprüfung in der Zugangskontrolleinheit 18 ist damit beendet.

Wurde im Zustand 41 kein Gesamt-Risikostufe in der Risikodatenbank ermittelt, wird in Zustand 43 geprüft, ob die Konfigurationsdatei bereits bestehende Instanztypen betrifft. Ist dies der Fall, werden von der eingespielten Konfigurationsdatei betroffene Instanztypen ermittelt, siehe Zustand 44, und für jeden ermittelten Instanztyp wird eine neue Containerinstanz im Sandboxing Modus gestartet, siehe Zustand 45.

Sind keine bereits vorhandenen Instanzen von der übergebenen Konfigurationsdatei betroffen, wird eine neue Instanz entsprechend der Isolationsrichtlinie, d.h. im Sandboxing Modus gestartet, siehe 46. Die aus Zustand 45 und 46 gestarteten Containerinstanzen werden anschließend nach enthaltenen Software-Modulen gescannt, siehe 47, und ein entsprechender Penetrationstest durchgeführt, siehe 48. Ein aus den Penetrationstests resultierendes Gesamt-Risiko wird einerseits in der Risikodatenbank abgespeichert, siehe Zustand 49 und andererseits zusammen mit durchzuführenden Aktionen an die Verwaltungsvorrichtung 11 übergeben, siehe 50.

Innerhalb der Konfigurationsdatei für die Zugangskontrolleinheit wird dann definiert, ob lediglich ein Alarm mit den Ergebnissen ausgegeben werden soll oder, z.B. nach Ablauf einer bestimmten Zeitspanne, die betroffenen Instanzen bzgl. der Erreichbarkeit eingeschränkt oder gestoppt werden sollen.

Im Gegensatz zum Stand der Technik wird für die Admission Control auf der orchestrierten Container Laufzeitumgebung zur Ausführungsfreigabe nicht die Deployment-Konfiguration der Instanz verwendet, sondern diese zunächst innerhalb einer "Sandbox", z.B. mit Hilfe von Netzwerkbeschränkungen, ausgeführt, dort mit Hilfe eines Penetration-Testing-Tools analysiert und anschießend komplett freigegeben.

Die Instanzüberprüfung und eine somit verzögerte Freigabe des Images auf der Laufzeitumgebung erfolgt aufgrund von geänderten ConfigMaps, geänderten Deployment-Konfigurationen und angepassten Image-Referenzen.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum sicheren Betrieb einer container-implementierten Softwarekomponente umfassend die Schritte:
- Empfangen (M1) einer Bereitstellungsinformation in einer zentralen Verwaltungsvorrichtung (11), wobei die Bereitstellungsinformation Informationen zur Softwarekomponente und deren Laufzeitkonfiguration umfasst,
- Konfigurieren (M2) einer Test-Laufzeitumgebung und einer Test-Softwarekomponente entsprechend der Bereitstellungsinformation auf einem von der Verwaltungsvorrichtung (11) verwalteten Gastrechner (12),
- Prüfen (M3), ob eine Sicherheitslücke für die auf der konfigurierten Test-Laufzeitumgebung ausgeführte Test-Softwarekomponente vorliegt, und
- abhängig von der ermittelten Sicherheitslücke,
Anpassen (M4) der Bereitstellungsinformation durch die Verwaltungsvorrichtung und Freigeben (M5) der Softwarekomponente zum Starten auf einer Laufzeitumgebung, die entsprechend der angepassten Bereitstellungsinformation konfiguriert sind, oder
Zurückweisen (M6) der Bereitstellungsinformation.

2. Verfahren nach Anspruch 1, wobei die angepasste Bereitstellungsinformation in einer Risikodatenbank (21) gespeichert wird und beim erneuten Empfangen der Bereitstellungsinformation die angepasste Bereitstellungsinformation bei der Risikodatenbank (21) abgefragt und gestartet wird.

3. Verfahren nach einem der vorangehenden Ansprüche, wobei die Test-Laufzeitumgebung und die Test-Softwarekomponente entsprechend einer zusätzlichen Isolationsrichtlinie ausgeführt wird.

4. Verfahren nach Anspruch 3, wobei
die Isolationsrichtlinie mindestens eine Beschränkung umfasst in Bezug auf Netzwerkverbindungen der Softwarekomponente und/oder mindestens eine Beschränkung in Bezug auf den Gastrechner (12), auf dem die Softwarekomponente konfiguriert und ausgeführt wird, und wobei die Isolationsrichtlinie die Konfiguration der Laufzeitumgebung und der Softwarekomponente entsprechend der Bereitstellungsinformation nicht verändert.

5. Verfahren nach Anspruch 4, wobei die Isolationsrichtlinie abhängig von der Bereitstellungsinformation ausgewählt und von der Verwaltungsvorrichtung (11) zugeordnet wird.

6. Verfahren nach einem der vorangehenden Ansprüche, wobei das Prüfen mittels mindestens einem Penetrationstest angewandt auf die Test-Softwarekomponente in der Test-Laufzeitumgebung, durchgeführt wird.

7. Verfahren nach Anspruch 6, wobei ein Komponentenerkennungsmodul einzelne Softwaremodule der Test-Softwarekomponente ermittelt und abhängig von den ermittelten Softwaremodulen ein Scanprofil aus verschiedenen Penetrationstests konfiguriert.

8. Verfahren nach Anspruch 7, wobei nach dem Konfigurieren eines neuen Scanprofils die Bereitstellungsinformation einer bereits ausgeführten Softwarekomponente erneut auf Sicherheitslücken geprüft wird.

9. Verfahren nach einem der Ansprüche 7 - 8, wobei das Scanprofil und das Komponentenerkennungsmodul in Form einer Konfigurationsdatei in der Verwaltungsvorrichtung, bevorzugt in einer Zugangskontrolleinheit, ausgebildet sind.

10. Verfahren nach einem der Ansprüche 6 - 8, wobei aus dem mindestens einen Penetrationstest eine Gesamt-Risikostufe für die Softwarekomponente aus einem Set von Einzel-Risikostufen ermittelt wird, wobei jede der Einzel-Risikostufen für eine unterschiedliche detektierte Sicherheitslücke ermittelt wird, und die Bereitstellungsinformation abhängig von der Risikostufe angepasst wird.

11. Verfahren nach Anspruch 10, wobei die für die Bereitstellungsinformation ermittelte Gesamt-Risikostufe in einer Risikodatenbank (21) abspeichert wird.

12. Verfahren nach einem der Ansprüche 10 - 11, wobei der abgespeicherten Gesamt-Risikostufe ein Erstellungszeitstempel zugeordnet wird.

13. Verfahren nach einem Ansprüche 10 - 12, wobei das Prüfen auf Sicherheitslücken durchgeführt wird, indem die Risikodatenbank (21) nach einer vorhandenen Gesamt-Risikostufe für die Bereitstellungsinformation überprüft wird, und die Bereitstellungsinformation anhand der ermittelten Gesamt-Risikostufe angepasst wird.

14. System umfassend eine Verwaltungsvorrichtung und mindestens einen von der Verwaltungsvorrichtung (11) verwalteten Gastrechner (12), die derart ausgebildet sind, folgende Schritte durchzuführen:
- Empfangen einer Bereitstellungsinformation in der zentralen Verwaltungsvorrichtung (11), wobei die Bereitstellungsinformation Informationen zur Softwarekomponente und deren Laufzeitkonfiguration umfasst,
- Konfigurieren einer Test-Laufzeitumgebung und einer Test-Softwarekomponente entsprechend der Bereitstellungsinformation auf einem der Gastrechner (12),
- Prüfen, ob eine Sicherheitslücke für die auf der Test-Laufzeitumgebung ausgeführte Test-Softwarekomponente vorliegt, und
- abhängig von der ermittelten Sicherheitslücke, Anpassen der Bereitstellungsinformation durch die Verwaltungsvorrichtung (11) und Starten der Softwarekomponente auf einer Laufzeitumgebung, die entsprechend der angepassten Bereitstellungsinformation konfiguriert sind, oder Zurückweisen der Bereitstellungsinformation.

15. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens nach einem der Ansprüche 1 - 13 durchzuführen.
